**Europäisches Patentamt**

**European Patent Office**

**Office européen des brevets**

(11) Veröffentlichungsnummer: **0 320 060**
**A2**

# EUROPÄISCHE PATENTANMELDUNG

(21) Anmeldenummer: **88202778.2**

(22) Anmeldetag: **05.12.88**

(51) Int. Cl.⁴: **F04D 7/04 , F04D 13/02 , F04D 29/12**

(30) Priorität: **11.12.87 DE 3741977**

(43) Veröffentlichungstag der Anmeldung:
**14.06.89 Patentblatt 89/24**

(84) Benannte Vertragsstaaten:
**CH DE ES FR IT LI**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **CH ES FR IT LI**

(72) Erfinder: **Bertram, Leo**
**Am Sender 10**
**D-5190 Stolberg(DE)**
Erfinder: **Schemmann, Hugo, Dr.**
**Zwartebergweg 6**
**Schaesberg(NL)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Pumpvorrichtung für leicht viskose Flüssigkeiten.**

(57) Die Erfindung bezieht sich auf eine Pumpvorrichtung für leicht viskose Flüssigkeiten, insbesondere wässerige Laugen, mit einem elektrischen Antriebsmotor und einer Pumpenkammer, in der ein Pumpenrad umläuft. Die Pumpvorrichtung weist eine Kombination folgender bekannter Merkmale auf:

a) der Antriebsmotor (1) ist ein zweipoliger Einphasensynchronmotor mit permanentmagnetischem Rotor (5),

b) die Pumpenkammer (22) ist spiegelsymmetrisch zu einer Ebene eines radial nach außen verlaufenden Auslaßstutzens (24) ausgebildet,

c) das Pumpenrad (25) weist elastische Pumpenflügel (25a, 25b) auf, deren Pumpfunktion unabhängig von der Drehrichtung ist,

d) die Pumpenkammer (22) ist gegenüber dem Antrieb abgedichtet mittels einer reibungsarmen Doppel-Lippendichtung (12),

e) zwischen Motor (1) und Pumpenrad (25) ist ein mechanisches Kupplungsglied (14, 17; 114, 117; 14, 217) vorgesehen, das einen Freischlag aufweist.

Fig.1

## Pumpvorrichtung für leicht viskose Flüssigkeiten

Die Erfindung bezieht sich auf eine Pumpvorrichtung für leicht viskose Flüssigkeiten, insbesondere wässerige Laugen, mit einem elektrischen Antriebsmotor und einer Pumpenkammer, in der ein Pumpenrad umläuft.

Unter derartigen leicht viskosen Flüssigkeiten sind beispielsweise wässerige Laugen in Waschmaschinen oder Geschirrspülmaschinen zu verstehen. Es kann sich aber auch um das Kondensatwasser in einem Wäschetrockner handeln oder auch um Förderpumpen allgemeiner Art, wie Aquarium-oder Springbrunnenpumpen.

Eine Pumpvorrichtung dieser Art ist aus der DE-PS 24 07 109 bekannt. Der Antriebsmotor ist dabei ein Einphasensynchronmotor ohne Anlaufhilfe, und das Pumpenrad weist nachgiebige Pumpenflügel auf, deren Elastizität derart gewählt ist, daß die erforderlichen Beschleunigungsmomente des Antriebsmotors beim Anlaufen nicht größer werden als das vom Motor maximal aufbringbare Moment. Ein derartiges Pumpenrad hat sich als zweckmäßig erwiesen, da seine Elastizität so eingestellt werden kann, daß die erforderlichen Beschleunigungsmomente des als Antrieb dienenden Einphasensynchronmotors beim Anlauf durch die Belastung des Pumpenrades nicht überschritten werden. Ein weiterer Vorteil eines solchen Pumpenrades besteht darin, daß Verunreinigungskörper, wie Knöpfe, Wäscheklammern oder Flusen, die in die Pumpe gelangen, diese nicht blockieren, sondern die elastischen Flügel evtl. etwas beiseite drücken und von den nachfolgenden Flügeln dann zum Auslaß befördert werden. Kommt es dennoch zu Blockaden, dann kann der Einphasensynchronmotor seine Drehrichtung ändern, und diese Drehrichtungsänderung führt dann zu einem Lockern der blockierenden Teile, die dann schließlich in der Gegenrichtung zum Auslaß gefördert werden.

Ein Nachteil der bekannten Konstruktion besteht aber darin, daß die Belastung die begrenzten Beschleunigungsmomente des Einphasensynchronmotors nicht übersteigen darf. Bei einem unmittelbar mit der Motorwelle gekuppelten Pumpenrad sind damit der Pumpleistung, wenn der Motor klein gehalten werden soll, rasch Grenzen gesetzt.

Es ist bekannt, durch einen Freischlag zwischen Antriebsmotor und Pumpenrad die Förderleistung gegenüber den Motor-Beschleunigungsmomenten zu erhöhen, da der Motor nämlich beim Durchlaufen des Freischlages frei von der Belastung anlaufen kann. Ein Einphasensynchronmotor, der frei von Belastung anlaufen kann, kann seine Rotormasse schon auf die synchrone Drehzahl beschleunigen und hat damit ein wesentlich höheres Beschleunigungsmoment zum Antreiben des Pumpenrades zur Verfügung als bei einem Anlauf aus dem Stillstand mit starr gekoppelter Last, bei dem Rotor und Pumpenrad gleichzeitig beschleunigt werden müssen.

Es sind aus dem Stand der Technik auch Doppel-Lippendichtungen für Wellen bekannt, die sich mit zwei auf Abstand angeordneten Lippen an einer abzudichtenden Welle anlegen.

Es ist Aufgabe der Erfindung, eine Pumpvorrichtung der eingangs erwähnten Art zu schaffen, die die niedrigen Beschleunigungsmomente eines Einphasensynchronmotors aus dem Stand heraus überwindet und darüber hinaus reibungsarm arbeitet, um so mit einer geringen Antriebsleistung eine möglichst hohe Pumpleistung zu erzielen.

Die gestellte Aufgabe ist erfindungsgemäß gelöst durch die Kombination folgender bekannter Merkmale:

a) der Antriebsmotor ist ein zweipoliger Einphasensynchronmotor mit permanentmagnetischem Rotor,

b) die Pumpenkammer ist spiegelsymmetrisch zu einer Ebene eines radial nach außen verlaufenden Auslaßstutzens ausgebildet,

c) das Pumpenrad weist elastische Pumpenflügel auf, deren Pumpfunktion unabhängig von der Drehrichtung ist,

d) die Pumpenkammer ist gegenüber dem Antrieb abgedichtet mittels einer reibungsarmen Doppel-Lippendichtung,

e) zwischen Motor und Pumpenrad ist ein mechanisches Kupplungsglied vorgesehen, das einen Freischlag aufweist.

Nach einer weiteren Ausgestaltung der Erfindung ist dabei vorgesehen, daß der Freischlag zwischen Motor und Doppellippendichtung angeordnet ist.

Eine solche Kombination bekannter Merkmale führt zu einer gegenüber der Baugröße und der Antriebsleistung des Motors relativ hohen Pumpleistung. Dies beruht darauf, daß zunächst als Antriebsmotor ein Einphasensynchronmotor mit unbestimmter Drehrichtung eingesetzt wird, der ein Pumpenrad mit nachgiebigen, elastischen Flügeln antreibt. Das niedrige Anlaufdrehmoment wird überwunden durch den Freischlag, der dem Rotor ein zunächst belastungsloses Anlaufen aus dem Stand erlaubt. Eine Anordnung des Kupplungsgliedes mit Freischlag zwischen Motor und Doppellippendichtung der Pumpenkammer hat den Vorteil, daß auch die Dichtungsreibung den Anlauf des Motors nicht behindert. Die Welle des Pumpenrades ist dann in der Doppel-Lippendichtung reibungsarm abgedichtet. Eine derartige Kombination bekannter Merkmale führt zu einer außerordentlich leistungsfähigen Pumpvorrichtung gegenüber dem Antriebsmoment des Antriebsmotors.

Nach einer weiteren Ausgestaltung der Erfindung ist vorgesehen, daß zwischen den Dichtungslippen der Doppel-Lippendichtung ein Depotraum vorgesehen ist, der mit Fett gefüllt ist. Der Rotor eines Motors und das Pumpenrad haben stets ein gewisses Axialspiel. Dieses Axialspiel kommt beim Anlauf und beim Abschalten zur Geltung. Wenn nun zwischen den Lippen der Doppel-Lippendichtung ein Fettdepot vorgesehen ist, dann wird immer ein wenig Fett aus dem Depot auf die Berührungsflächen aufgetragen, wenn sich vor allem das Pumpenrad axial verschiebt. Auf diese Weise ergibt sich bei jedem Pumpen-An- und -Abstellen jedesmal automatisch eine neue Schmierung der Dichtungsflächen.

Nach einer weiteren Ausgestaltung der Erfindung ist vorgesehen, daß der Winkel Alpha des Freischlages zwischen 180° und 300° gewählt ist, vorzugsweise 270° beträgt. Ein Freischlag in dieser Größenordnung genügt, dem Motor bereits so viel Anlaufzeit zur Verfügung zu stellen, daß das zur Beschleunigung des Pumpenrades zur Verfügung stehende Beschleunigungsmoment bereits deutlich oberhalb des Beschleunigungsmomentes aus dem Stillstand bei starr gekoppeltem Pumpenrad liegt.

Nach einer weiteren Ausgestaltung der Erfindung ist vorgesehen, daß der Freischlag zwischen einem ersten und einem zweiten Kupplungsglied gebildet ist, wobei das erste Kupplungsglied einen Kupplungsstift aufweist, der gegen Anschlagschultern im Kupplungsglied auflaufen kann, wobei die Bogenlänge der Freischlagnut in der Größenordnung des Freischlagwinkels Alpha aufliegt. Ein Kupplungsteil ist dabei kraftschlüssig mit der Motorwelle und ein anderes Kupplungsteil kraftschlüssig mit der Welle des Pumpenrades verbunden.

Eine abgewandelte Ausführungsform des Freischlages ist dadurch gekennzeichnet, daß der Freischlag gebildet ist von einem Kupplungsstift, der radial von einem mit der Motorachse formschlüssig verbundenen ersten Kupplungsteil absteht, und einer inneren Umfangsnut eines zweiten Kupplungsteiles, wobei die Umfangsnut eine Bogenlänge aufweist, die dem Bogen des Freischlagwinkels Alpha entspricht. Eine solche Freischlagausbildung ist axial kurzbauend und vermindert damit die gesamte axiale Länge der Pumpvorrichtung.

Nach einer weiteren Ausgestaltung der Erfindung ist vorgesehen, daß die Anschlagschultern elastisch ausgebildet sind. Eine elastische Ausbildung ermöglicht zum einen ein weiches Auflaufen, wodurch die Anschlaggeräusche niedrig gehalten werden. Zum anderen wird eine gewisse Rückfederung erreicht, wenn das Pumpenrad in dieser Richtung noch nicht mitläuft und die Welle noch einmal den ganzen Freischlag in der Gegenrichtung durchläuft. Außerdem werden die mechanischen Belastungsspitzen auf den Kupplungsstift stark reduziert, was die Lebensdauer erhöht.

Nach einer weiteren Ausgestaltung der Erfindung ist vorgesehen, daß die Anschlagschultern von einem elastichen Steg gebildet werden, der sich durch das topfförmig ausgebildete zweite Kupplungsteil erstreckt. Ein solcher Steg erweist sich als besonders elastisch und rückfedernd. Der Steg kann dabei in vorteilhafter Weise von einem elastischen Band gebildet werden.

Nach einer weiteren Ausgestaltung der Erfindung ist vorgesehen, daß die Pumpenwelle doppelt gelagert ist zwischen der Doppel-Lippendichtung und dem Kupplungsglied einerseits und in einer Zentralbohrung der Motorwelle andererseits. Eine derartige Doppel-Lagerung der Pumpenradwelle sorgt für eine gute Führung des Pumpenrades. Besonders vorteilhaft ist es dabei, wenn die Pumpenwelle doppelt gelagert ist zwischen Doppel-Lippendichtung und Kupplungsglied. Bei dieser Anordnung entfällt die Lagerung in der Zentralbohrung der Motorwelle, wodurch die Konstruktion toleranzunempfindlicher wird.

Die Erfindung wird anhand der Zeichnungen näher erläutert. Es zeigen:

Fig. 1 eine Pumpvorrichtung mit Einphasensynchronmotor, Pumpenrad mit elastischen Flügeln, Freischlag und einer Doppel-Lippendichtung,

Fig. 2 einen Schnitt II-II durch die Pumpe nach Fig. 1,

Fig. 3 einen Schnitt längs der Linie III-III durch die Pumpvorrichtung nach Fig. 1 zur besonderen Darstellung des eingesetzten Freischlages,

Fig. 4 ein abgewandelte Gehäuse der Pumpvorrichtung mit einer zwischen Doppellippendichtung und Kupplungsglied doppelt gelagerten Pumpenradwelle,

Fig. 5 einen Schnitt durch eine abgewandelte Ausführungsform der Freischlagkupplung der Pumpvorrichtung,

Fig. 6 eine weitere Abwandlung der Freischlagkupplung der Pumpvorrichtung.

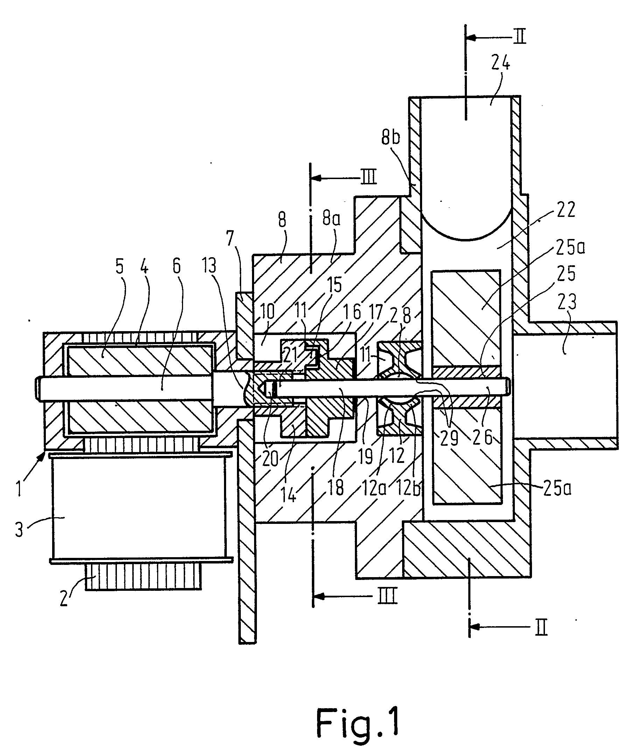

Der in Fig. 1 dargestellte Schnitt durch eine Pumpvorrichtung zeigt einen Einphasensynchronmotor 1 mit einem aus der Zeichnung nicht erkennbar U-förmig geformten Statoreisen 2 und auf die Schenkel des Statoreisens 2 aufgeschobene Erregerspulen 3. In der Polbohrung 4 zwischen den freien Enden der Schenkel des Statoreisens 2 kann ein permanentmagnetischer, diametral magnetisierter Rotor 5 mit einer Motorwelle 6 umlaufen. Der Einphasensynchronmotor 1 ist aufgeflanscht mittels einer Platte 7 auf ein Pumpengehäuse 8. Dieses Pumpengehäuse 8 besteht aus einem Lagerteil 8a und einem Kammerteil 8b. In dem Lagerteil 8a befindet sich ein Kupplungshohlraum 10, in dem eine Freischlagkupplung 11 angeordnet ist. Ein weiterer Dichtungshohlraum 12c nimmt eine Doppel-Lippendichtung 12 auf mit ihren Dichtungslippen 12a und 12b.

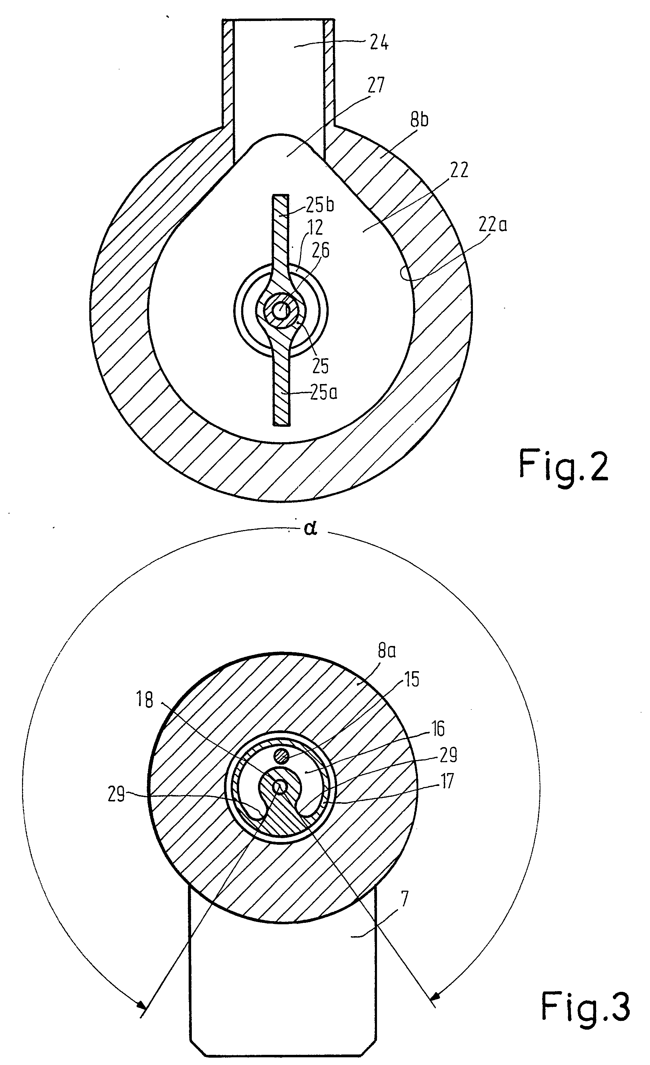

Auf das antriebsseitige Ende 13 der Motorwelle 6 ist ein erstes Kupplungsteil 14 formschlüssig aufgesetzt. Dieses erste Kupplungsteil 14 weist einen Kupplungsstift 15 auf, der axial in eine bogenförmige Freischlag-Stirnnut 16 (Fig. 3) eines zweiten Kupplungsteiles 17 eingreift. Das zweite Kupplungsteil 17 ist formschlüssig mit einer Pumpenwelle 18 verbunden.

Die Pumpenwelle ist im Lagerteil 8a in einem Gleitlager 19 gelagert. Eine zweite Lagerung erfährt sie durch das Eingreifen in eine zentrale Bohrung 20 der Antriebsseite 13 der Motorwelle 6. In die Bohrung 20 greift dazu ein Stummel 21 der Pumpenwelle 18 ein.

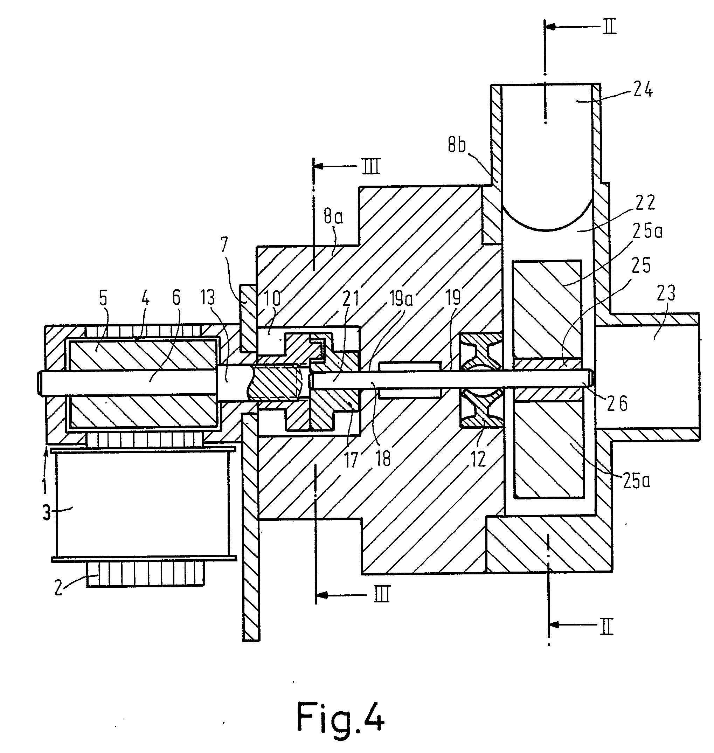

Fig. 4 zeigt eine abgewandelte Lagerausbildung. Das zweite Kupplungsteil 17 sitzt dabei wieder- formschlüssig auf der Pumpenwelle 18. Sein der Motorwelle zugewandter Wellenstummel 21 endet dabei aber im Kupplungsteil 17. Bei der Ausführungsform nach Fig. 4 erfolgt die erste Lagerung der Pumpenwelle 18 wie bei der nach Fig. 1 in einem Gleitlager 19. Als zweite Lagerung dient ein zusätzliches Gleitlager 19a in der Nähe des Kupplungshohlraumes 10.

Der Kammerteil 8b des Pumpengehäuses in Fig. 1 und 4 weist eine spiegelsymmetrische Pumpenkammer 22 auf, in die axial ein Einlaßstutzen 23 mündet und von der radial ein Auslaßstutzen 24 wegführt. Innerhalb der Pumpenkammer 22 läuft ein Pumpenrad 25 um, das auf das Pumpenwellenende 26 der Pumpwelle 18 verdrehfest aufgesetzt ist. Das Pumpenrad 25 besteht aus einem nachgiebigen Kunststoff, so daß sich die Pumpenflügel 25a und 25b entgegen der Drehrichtung der Pumpenwelle 18 bei Last zunehmend wegbiegen können, und zwar bei beiden Drehrichtungen des Einphasensynchronmotors.

Fig. 2 zeigt, wie die Pumpkammer 22 im Schnitt ausgebildet ist. Die Kammerwand 22a ist, abgesehen von dem Auslaßbereich 27, rund und weitet sich im Auslaßbereich 27 zum Auslaßstutzen hin keilförmig auf. Das Pumpenrad 25 hat in der Darstellung nur zwei Flügel; es kann ohne weiteres auch mehr Flügel aufweisen.

Die Doppel-Lippendichtung 12 drückt mit ihren Lippen 12a und 12b im Abstand voneinander ringförmig gegen die Pumpwelle 18 (Fig. 1). Dadurch ergibt sich beim Abdichten eine geringe Berührungsreibung. Diese Berührungsreibung wird noch dadurch verringert, daß in einen Depotraum 28 zwischen den beiden Dichtungslippen 12a und 12b ein Fett, beispielsweise ein Siliconfett, eingebracht ist. Bei axialen Bewegungen der Pumpenwelle 18 wird immer ein wenig Fett auf die nahezu linienförmigen Berührungsstellen 29 aufgebracht.

Fig. 3 zeigt anhand des Schnittes III-III nach Fig. 1 und 4 das Zusammenwirken der ersten und zweiten Kupplungsteile 14, 17. Das erste Kupplungsteil 14 greift axial mit seinem Kupplungsstift 15 in die bogenförmige Freischlag-Stirnnut 16 ein, die im zweiten Kupplungsteil 17 vorgesehen ist. Der Kupplungsstift 15 kann beim Anlaufen des Rotors 5 je nach dessen Drehrichtung gegen eine der beiden Schultern 29 am Ende der Nut 16 auflaufen nach Durchlaufen der Bogenlänge der Nut 16. Die Schultern 29 sollen dabei vorzugsweise elastisch ausgebildet sein. Entweder reicht beim Auflaufen des Kupplungsstiftes 15 auf eine der Schultern 29 das Beschleunigungsmoment des Motors bereits aus, um das Pumpenrad 25 mitzunehmen, oder aber der Motor kehrt seine Drehrichtung um, und der Kupplungsstift kann nun die volle Bogenlänge von ca. 270° der Freischlag-Stirnnut durchlaufen, wonach dann das Beschleunigungsmoment des Motors 1 ausreichend ist.

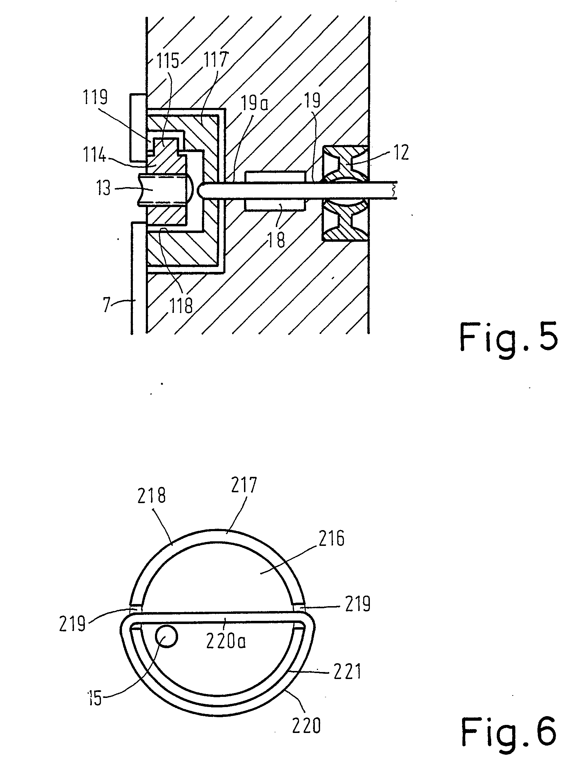

Fig. 5 zeigt eine abgewandelte Ausführungsform einer Freischlagkupplung mit den Kupplungsteilen 114 und 117. Der Kupplungsstift 115 ragt dabei radial aus dem ersten Kupplungsteil 114 heraus und greift in eine an der Innen wand 118 gelegene Freischlagnut 119 ein. Die Pumpenwelle 18 ist in den beiden Gleitlagern 19, 19a gelagert und fluchtet mit der Motorwelle 6. Die Freischlagkupplung 114, 117 nach Fig. 5 ist axial kürzer aufgebaut.

Fig. 6 zeigt eine weitere abgewandelte Ausführungsform der Freischlagkupplung. Der axiale Kupplungsstift 15 des ersten Kupplungsteiles 14 greift dabei in eine topfförmige Vertiefung 216 eines zweiten Kupplungsteiles 217 ein, das rings um den Umlaufweg des Kupplungsstiftes 15 eine Topfwand 218 aufweist. Die Topfwand 218 ist mit zwei seitlichen Schlitzen 219 versehen. Ein Gummiring 220 ist in die Schlitze 219 eingelegt und greift mit einem elastischen Quersteg 220a quer durch den topfförmigen Hohlraum 216. Außenseitig legt sich der Ring 220 an die Außenwand 221 des zweiten Kupplungsteiles 217 an.

Bei dieser Ausführungsform der Freischlagkupplung läßt sich der Kupplungsstift 15 an dem elastischen Quersteg außerordentlich weich abbremsen, und die Feder- bzw. Vorspannkraft des Gummiringes 220 liefert eine Rückfederung, die dazu geeignet ist, den Kupplungsstift und damit den Rotor 5 in der Gegenrichtung zusätzlich zu beschleunigen.

**Ansprüche**

1. Pumpvorrichtung für leicht viskose Flüssigkeiten, insbesondere wässerige Laugen, mit einem elektrischen Antriebsmotor und einer Pumpenkammer, in der ein Pumpenrad umläuft, gekennzeichnet durch die Kombination folgender bekannter Merkmale:

a) der Antriebsmotor (1) ist ein zweipoliger Einphasensynchronmotor mit permanentmagnetischem Rotor (5),

b) die Pumpenkammer (22) ist spiegelsymmetrisch zu einer Ebene eines radial nach außen verlaufenden Auslaßstutzens (24) ausgebildet,

c) das Pumpenrad (25) weist elastische Pumpenflügel (25a, 25b) auf, deren Pumpfunktion unabhängig von der Drehrichtung ist,

d) die Pumpenkammer (22) ist gegenüber dem Antrieb abgedichtet mittels einer reibungsarmen Doppel-Lippendichtung (12),

e) zwischen Motor (1) und Pumpenrad (25) ist ein mechanisches Kupplungsglied (14, 17; 114, 117; 14, 217) vorgesehen, das einen Freischlag aufweist.

2. Pumpvorrichtung nach Anspruch 1, dadurch gekennzeichnet, daß der Freischlag zwischen Motor (1) und Doppellippendichtung (12) angeordnet ist.

3. Pumpvorraichtung nach Anspruch 1 oder 2, dadurch gekennzeichnet, daß zwischen den Dichtungslippen (12a, 12b) der Doppel-Lippendichtung (12) ein Depotraum (28) vorgesehen ist, der mit Fett gefüllt ist.

4. Pumpvorrichtung nach Anspruch 1, dadurch gekennzeichnet, daß der Winkel Alpha des Freischlages zwischen 180° und 300° gewählt ist, vorzugsweise 270° beträgt.

5. Pumpvorrichtung nach einem der Ansprüche 1 bis 4, dadurch gekennzeichnet, daß der Freischlag zwischen einem ersten (14, 114, 214) und einem zweiten Kupplunsglied (17, 117, 217) gebildet ist, wobei das erste Kupplunsglied (14, 114, 214) einen Kupplungsstift (15, 115) aufweist, der gegen Anschlagschultern (29) im Kupplungsglied (17, 117, 217) auflaufen kann, wobei die Bogenlänge der Freischlag-Stirnnut in der Größenordnung des Freischlagwinkels liegt.

6. Pumpvorrichtung nach einem der Ansprüche 1 oder 4, dadurch gekennzeichnet, daß der Freischlag gebildet ist von einem Kupplungsstift (115), der radial von einem mit der Motorachse formschlüssig verbundenen ersten Kupplungsteil (114) absteht, und einer inneren Umfangsnut (119) eines zweiten Kupplungsteiles (117), wobei die Umfangsnut (119) eine Bogenlänge aufweist, die dem Bogen des Freischlagwinkels Alpha entspricht.

7. Pumpvorrichtung nach Anspruch 5 oder 6, dadurch gekennzeichnet, daß die Anschlagschultern (29) elastisch ausgebildet sind.

8. Pumpvorrichtung nach einem der Ansprüche 5 bis 7, dadurch gekennzeichnet, daß die Anschlagschultern (29) von einem elastischen Quersteg (220a) gebildet werden, der sich durch das topfförmig ausgebildete zweite Kupplungsteil (217) erstreckt.

9. Pumpvorrichtung nach Anspruch 1 oder 2, dadurch gekennzeichnet, daß die Pumpenwelle (18) doppelt gelagert ist zwischen der Doppel-Lippendichtung (12) und dem Kupplungsglied (14, 17; 114, 117; 217) einerseits und in einer Zentralbohrung (20) der Motorwelle (6) andererseits.

10. Pupvorrichtung nach einem der Ansprüche 1 bis 9, dadurch gekennzeichnet, daß die Pumpenwelle (18) doppelt gelagert ist zwischen der Doppel-Lippendichtung (12) und dem Kupplungsglied (14, 17; 114, 117; 217).

Fig.1

Fig.2

Fig.3

2-Ⅳ-PHD 87-269

Fig.4

Fig. 5

Fig. 6

4-IV-PHD 87-269